# EUROPEAN PATENT SPECIFICATION

(11) **EP 3 327 922 B1**
(45) Date of publication and mention of the grant of the patent: **14.07.2021**
(21) Application number: 16201047.4
(22) Date of filing: 29.11.2016
(51) Int. Cl.: H02P 6/14

(54) **FAN CONTROL CIRCUIT**
LÜFTERSTEUERKREIS
CIRCUIT DE COMMANDE DE VENTILATEUR

(43) Date of publication of application: 30.05.2018
(73) Proprietor: Honeywell Technologies Sarl, 1180 Rolle (CH)
(72) Inventor: Corti, Umberto, 23848 Valmadrera (LC) (IT); Rizzi, Giuseppe, 20842 Besana in Brianza, MB (IT)
(74) Representative: Sturm, Christoph

(56) References cited:
- EP-A1- 2 704 297
- DE-U1- 9 204 811
- US-A- 5 537 015
- US-A1- 2011 181 214
- US-B1- 8 022 746

## Description

The present patent application relates to a fan control circuit.

A gas burner appliance comprises a burner chamber. A gas/air mixture can be combusted or burned within said burner chamber when the gas burner and thereby the gas/air mixture is ignited. The air of the gas/air mixture is provided by an air pipe or air duct. The gas of the gas/air mixture is provided by a gas pipe or gas duct. Exhaust resulting from the combustion can flow out of the burner chamber and can emerge into the ambient of the gas burner through an exhaust pipe or exhaust duct. A gas burner appliance also comprises a fan being assigned to the exhaust pipe or the air pipe and a gas valve being assigned to the gas pipe.

The operation of gas burner appliance can be controlled by a gas burner controller. The gas burner controller controls e.g. the gas valve position of the gas valve on basis of signals provided by combustion sensors. Further on, the operation of the fan needs to be controlled. In known gas burner appliances, the fan comprises a separate fan control unit positioned within a fan housing. The gas burner controller communicates with the fan control unit. However, a separate fan control unit results in additional costs.

US 5 537 015 A and US 2011/181 214 A disclose fan control circuit according to the prior art.

Other prior art is disclosed by EP 2 704 297 A1 and by US 8 022 746 B1.

Against this background a novel fan control circuit according to the invention as defined in the independent claim 1 is provided. Further embodiments of the invention are defined in the dependent claims 2 - 11.

The fan control circuit comprises commutation circuit part for providing signals depending from the position of a rotor of the single-phase brushless DC fan motor, wherein said position of the rotor of the single-phase brushless DC motor is detectable by a sensor of the single-phase brushless DC motor connectable to said commutation circuit part. The fan control circuit further comprises a power circuit part to which a stator coil of the single-phase brushless DC fan motor is connectable for proving electrical voltage to the stator coil of the single-phase brushless DC fan motor, said power part having a H-bridge with four electrical switches, the stator coil of the single-phase brushless DC fan motor being connectable to said H-bridge in such a way that polarity of the electrical voltage provided to the stator coil of the single-phase brushless DC fan motor is changeable by changing the state of operation of the four electrical switches of the H-bridge, said power part further having a driver circuit part for changing the state of operation of the four electrical switches of the H-bridge on basis of the signals provided by the commutation circuit part. The fan control circuit further comprises a modulation circuit part for modulating the rotational speed of the rotor of the single-phase brushless DC fan motor. The fan control circuit is designed to be embedded in the gas burner controller and to control operation of a single-phase brushless DC fan motor. The invention avoids the need for a separate fan control unit at the fan.

The four electrical switches of the H-bridge of power circuit part are provided by transistors. The driver circuit part of power circuit part changes the state of operation of the four transistors of the H-bridge on basis of the signals provided by the commutation circuit part in such a way that either a first transistor and second transistor of the H-bridge or a third transistor and a fourth transistor of the H-bridge are closed or activated while the other transistors of the H-bridge are opened or inactivated. This guarantees the continuous rotation of the rotor of the fan motor, the polarity of the voltage applied to the stator coil of the fan motor is reversed at the right moment, based on the position of the rotor of the motor.

The first transistor of the H-bridge of power circuit part is a MOSFET transistor and the second transistor of the H-bridge is an IGBT transistor, wherein the first output signal of the commutation circuit part is provided to the first and second transistors of the H-bridge of power circuit part. The first output signal of the commutation circuit part may be provided directly to the gate of the second transistor and through a first bootstrap section of the driver circuit part to gate of the first transistor.

The third transistor of the H-bridge of power circuit part is a MOSFET transistor and the fourth transistor of the H-bridge is an IGBT transistor, wherein the second output signal of the commutation circuit part is provided to the third and fourth transistors of the H-bridge of power circuit part. The second output signal of the commutation circuit part may be provided directly to the gate of the fourth transistor and through a second bootstrap section of the driver circuit part to gate of the third transistor.

Preferably, the modulation circuit part modulates the rotational speed of the rotor of the single-phase brushless DC fan motor by activating or deactivating the first and third transistors of the H bridge on basis of a PWM signal having a higher frequency than the signals provided by the commutation circuit part, whereby the PWM signal and the output signals of the commutation circuit part are provided through the respective bootstrap section of the driver circuit part to respective gate of the second and third transistors.

The second and fourth transistor being IGBT transistors have ultra-fast soft recovery diodes. This diode characteristic of the IGBT transistors reduces the power dissipated in the MOSFET transistors due to their PWM signal commutation.

Preferred developments of the invention are provided by the dependent claims and the description which follows. Exemplary embodiments are explained in more detail on the basis of the drawing, in which:
- Figure 1: shows a fan control circuit according to the invention;
- Figure 2: shows the detail IA of the fan control circuit according to Figure 1 in a first status;
- Figure 3: shows the detail IA of the fan control circuit according to Figure 1 in a second status;
- Figure 4: shows the detail IB of the fan control circuit according to Figure 1;
- Figure 5: shows the detail II of the fan control circuit according to Figure 1;

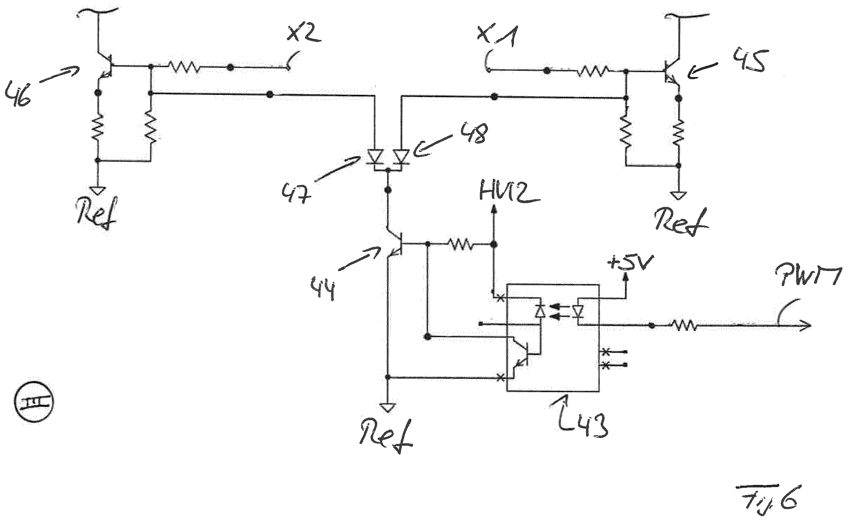

- Figure 6: shows the detail III of the fan control circuit according to Figure 1.

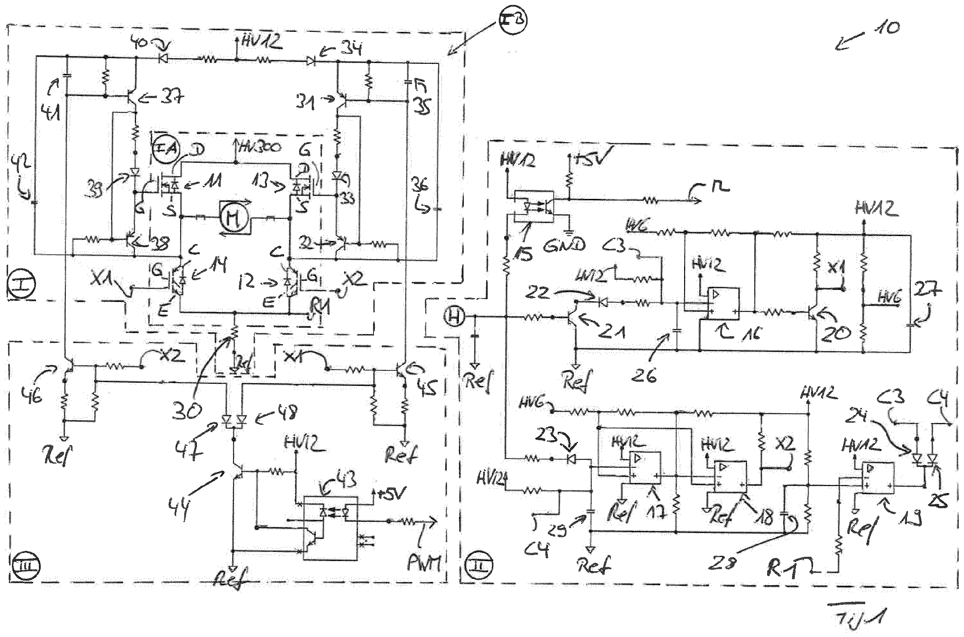

- Figure 1: shows a fan control circuit 10 according to the present application.

The fan control circuit 10 is designed for controlling a single-phase brushless DC fan motor M of a fan of gas burner appliance. Further on, the fan control circuit 10 is designed to be embedded in a gas burner controller or on a circuit board of the gas burner controller.

The fan control circuit 10 comprises a commutation circuit part II for providing signals X1, X2 depending from the position of a rotor of the single-phase brushless DC fan motor M, wherein said position of the rotor of the single-phase brushless DC motor M is detectable by a sensor H of the single-phase brushless DC motor M connectable to said commutation circuit part II. The input signals of the commutation circuit part II are the output signal of the sensor H and the tacho signal n of the fan, wherein the output signal of the sensor H provides information about the position of the rotor of the single-phase brushless DC motor M and wherein the tacho signal n provides information about speed n of the rotor of the single-phase brushless DC motor M. The output signals of the commutation circuit part II are the signals X1 and X2.

The fan control circuit 10 comprises further a power circuit part I to which a stator coil of the single-phase brushless DC fan motor M is connectable for proving electrical voltage to the stator coil of the single-phase brushless DC fan motor M.

Said power part I comprises a H-bridge IA with four electrical switches 11, 12, 13, 14, the stator coil of the single-phase brushless DC fan motor M being connectable to said H-bridge IA in such a way that polarity of the electrical volt-age provided to the stator coil of single-phase brushless DC fan motor M is changeable by changing the state of operation of the four electrical switches 11, 12, 13, 14 of the H-bridge IA. Said power part I comprises further a driver circuit part IB for changing the state of operation of the four electrical switches 11, 12, 13, 14 of the H-bridge IA on basis of the signals X1, X2 provided by the commutation circuit part II. The power circuit part I of the fan control circuit 10 uses the output signals X1 and X2 of the commutation circuit part II as input signals.

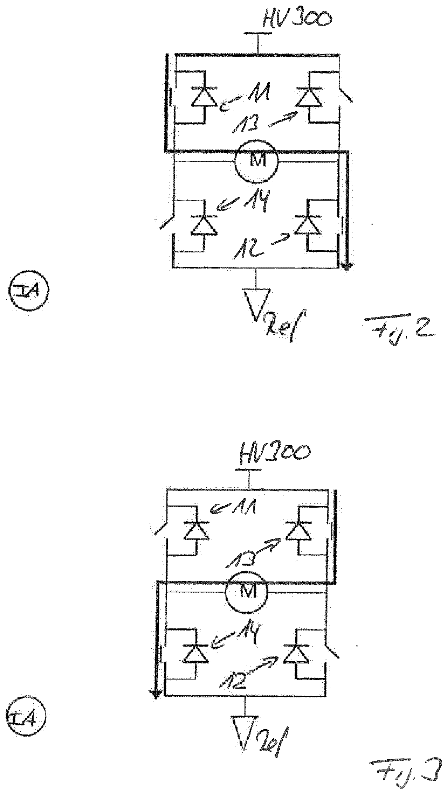

The four electrical switches 11, 12, 13, 14 of the H-bridge IA of power circuit part I are provided by transistors 11, 12, 13, 14. Figures 2 and 3 show a schematic drawing of the H-bridge IA in two different statuses.

In the status of Figure 2 the first and second transistors 11 and 12 are closed or activated and can therefore provide electrical voltage with a first polarity to the stator coil of the single-phase brushless DC fan motor M.

In the status of Figure 3 the third and fourth transistors 13 and 14 are closed or activated and can therefore provide electrical voltage with a second, reversed polarity to the stator coil of the single-phase brushless DC fan motor M.

By reversing the polarity, the fan control circuit is able to keep the rotor of the single-phase brushless DC fan motor M permanent rotating.

The stator coil of motor M is with a first contact connected between the source S of the first transistor 11 and the collector C of the fourth transistor 14 and with a second contact connected between the source S of the third transistor 13 and the collector C of the third transistor 13.

The fan control circuit 10 comprises further a modulation circuit part III for modulating the rotational speed of the rotor of the single-phase brushless DC fan motor M. The modulation circuit part III uses as input signals a PWM signal provided by a microcontroller (not shown) and the output signals X1 and X2 of the commutation circuit part II.

The PWM signal provided by a microcontroller (not shown) can have a frequency of e.g. 16 kHz. The PWM signal has a frequency preventing the generation of acoustic noise. The microcontroller (not shown) is supplied with the voltage level of +5V. Further voltage levels Ref, HV300, HV12, HV6 and GND (ground) are present. The voltage level HV12 is 12 Volts greater than the voltage level Ref. The voltage level HV6 is 6 Volts greater than the voltage level Ref. The voltage level HV300 is 300 Volts greater than the voltage level Ref. The voltage levels HV300, HV12, HV6 are present in the part of the circuit board connected to the so-called mains.

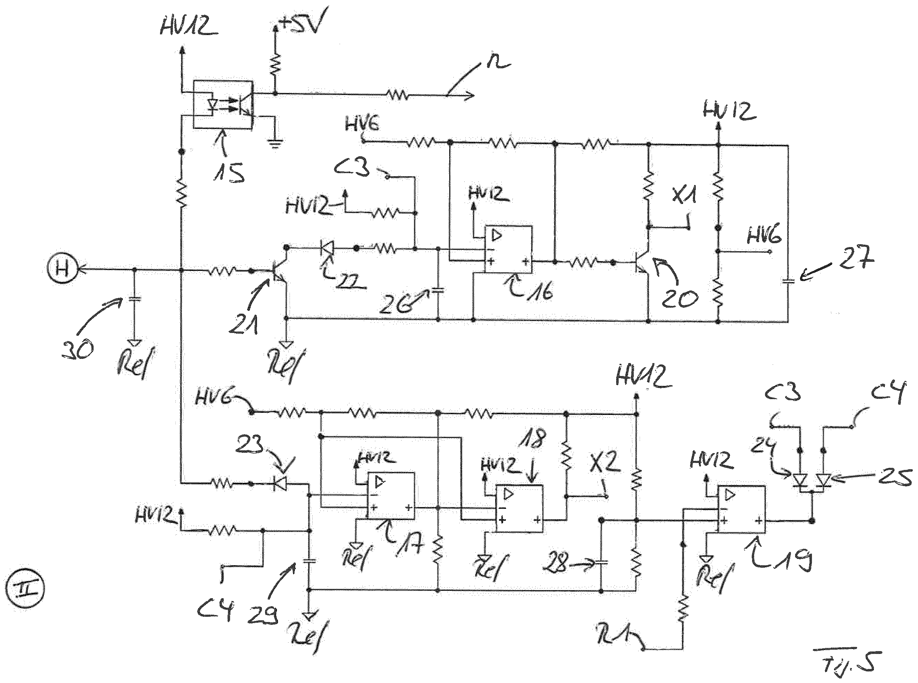

Figure 5 shows details of the commutation circuit part II of the fan control circuit 10 that provides the signals X1, X2 depending from the position of the rotor of the single-phase brushless DC fan motor M.

The commutation circuit part II of the fan control circuit 10 comprises an optical coupler 15, several comparators 16, 17, 18 and 19, a transistor 20 and 21, several diodes 22, 23, 24 and 25, several capacitors 26, 27, 28 and 29 and several resistors not individually provided with reference signs. The transistors 20 and 21 are preferably provided as npn transistors.

The sensor H being preferably a Hall sensor of the single-phase brushless DC motor M provides as input signal for the commutation circuit part II a logic 0 or a logic 1 depending from the position of the rotor of the single-phase brushless DC motor M, namely depending from the position of the magnetic poles of the rotor.

E.g., when the sensor H senses the south pole S of the rotor of the single-phase brushless DC motor M the sensor H provides a logic 0. When the sensor H senses the north pole N of the rotor of the single-phase brushless DC motor M the sensor H provides a logic 1.

The commutation circuit part II provides the first output signal X2 for closing or activating the first transistor 11 of the H-bridge IA of power circuit part I and the second transistor 12 of the H-bridge IA of power circuit part I when the input signal of the commutation circuit part II is a logic 1.

The commutation circuit part II provides the second output signal X1 for closing or activating the third transistor 13 of the H-bridge IA of power circuit part I and the fourth transistor 14 of the H-bridge IA of power circuit part I when the input signal of the commutation circuit part II is a logic 0.

If the signal provided by the motor sensor H and thereby the input signal of the commutation circuit part II changes from a logic 1 to a logic 0, then the capacitor 29 of the commutation circuit part II becomes discharged with a higher speed than the capacitor 26 becomes charged.

The capacitor 26 is connected between the minus terminal of comparator 16 and the voltage level Ref. The capacitor 29 is connected between the minus terminal of comparator 17 and the voltage level Ref.

After the capacitor 29 is discharged and before capacitor 26 is fully charged, all transistors 11, 12, 13 and 14 of the H-bridge IA are opened or deactivated. This lasts for e.g. 0.6 msec. After the capacitor 26 is charged, the output signal X1 for closing or activating the third and fourth transistors 13, 14 is provided by the commutation circuit part II.

If signal provided by the motor sensor H and thereby the input signal of the commutation circuit part II changes from a logic 0 to a logic 1, then the capacitor 26 of the commutation circuit part II becomes discharged with a higher speed than the capacitor 29 becomes charged.

After the capacitor 26 is discharged and before capacitor 29 is fully charged, all transistors 11, 12, 13 and 14 of the H-bridge IA are opened or deactivated. This lasts for e.g. 0.6 msec. After the first capacitor 29 charged, the output signal X2 for closing or activating the first and second transistors 11, 12 is provided by the commutation circuit part II.

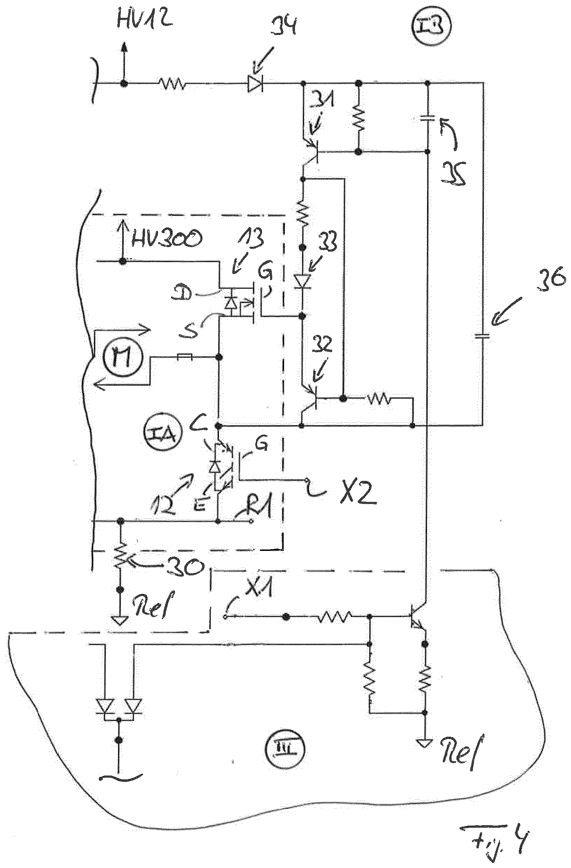

The commutation circuit part II further comprises an electrical current limitation section using a signal measures across a resistor 30 (see Figure 4) for measuring the electrical current of the stator coil of the single-phase brushless DC fan motor M and the comparator 19. The signal R1 across by the resistor 30 is provided as input signal for the comparator 19 (See Figure 5).

The output of the comparator 19 provided though the diodes 24 and 25 at the contacts C4 and C3 discharges the capacitors 26 and 29 when the electrical current is above a threshold.

The driver circuit part IB of power circuit part I changes the state of operation of the four transistors 11, 12, 13, 14 of the H-bridge IA on basis of the signals X1, X2 provided by the commutation circuit part II. The driver circuit part IB changes the state of operation of the four transistors 11, 12, 13, 14 in such a way that either the first transistor 11 and the second transistor 12 of the H-bridge IA (see Figure 2) or the third transistor 13 and the fourth transistor 14 of the H-bridge IA (see Figure 3) are closed or activated while the other transistors of the H-bridge IA are opened or inactivated.

As mentioned above, the commutation circuit part II provides either the output signal X2 for closing or activating the first transistor 11 of the H-bridge IA of power circuit part I and the second transistor 12 of the H-bridge IA of power circuit part I or the output signal X1 for closing or activating the third transistor 13 of the H-bridge IA of power circuit part I and the fourth transistor 14 of the H-bridge IA of power circuit part I depending on the position of the rotor of the motor M sensed by the sensor H.

The output signal X2 of the commutation circuit part II is provided directly to the gate G of the second transistor 12 and through a first bootstrap section of the driver circuit part IB to the gate G of the first transistor 11. The output signal X1 of the commutation circuit part II is provided directly to the gate G of the fourth transistor 14 and through a second bootstrap section of the driver circuit part IB to the gate G of the third transistor 13.

The first bootstrap section (see Figures 1 and 4) of the driver circuit part IB comprises the transistors 31 and 32, a diode 33 connected between the transistors 31 and 32, a further diode 34, capacitors 35 and 36 and resistors not individually provided with reference signs. The transistors 31 and 32 are preferably provided as pnp transistors.

The second bootstrap section (see Figures 1 and 4) of the driver circuit part IB comprises the transistors 37 and 38, a diode 39 connected between the transistors 37 and 38, a further diode 40, capacitors 41 and 42 and resistors not individually provided with reference signs. The transistors 37 and 38 are preferably provided as pnp transistors.

The diode 33 is connected between the collector of the transistor 31 and the emitter of the transistor 32. The anode of the diode 33 is connected to collector of the transistor 31 while the cathode of the diode 33 is connected to emitter of the transistor 32.

The cathode of diode 33 and the emitter of the transistor 32 are both connected to the gate G of the MOSFET transistor 13. The collector of the transistor 32 is connected to the collector C of the IGBT transistor 12. The capacitor 35 is connected in parallel to the transistor 31, namely to the basis and emitter of the transistor 31, while the capacitor 36 is connected in parallel to the series connection of transistors 31, 32, namely to the emitter of the transistor 31 and the collector of the transistor 32. The basis of the transistor 32 is connected to the collector of the transistor 31. The diode 34 is connected between the emitter of the transistor 31 and the voltage level HV12, wherein the cathode of the diode 34 is connected to the emitter of the transistor 31 and anode of the same is connected the voltage level HV12.

The diode 39 is connected between the collector of the transistor 37 and the emitter of the transistor 38. The anode of the diode 39 is connected to collector of the transistor 37 while the cathode of the diode 39 is connected to emitter of the transistor 38.

The cathode of diode 39 and the emitter of the transistor 38 are both connected to the gate G of the MOSFET transistor 11. The collector of the transistor 38 is connected to the collector C of the IGBT transistor 14. The capacitor 41 is connected in parallel to the transistor 37, namely to the basis and emitter of the transistor 37, while the capacitor 42 is connected in parallel to the series connection of transistors 37, 38, namely to the emitter of the transistor 37 and the collector of the transistor 38. The basis of the transistor 38 is connected to the collector of the transistor 37. The diode 40 is connected between the emitter of the transistor 37 and the volt-age level HV12, wherein the cathode of the diode 40 is connected to the emitter of the transistor 37 and anode of the same is connected the voltage level HV12.

The MOSFET transistors 11, 13 of the H bridge IA need the respective bootstrap circuits to generate a voltage on the gate G of the same which is higher than the HV300 voltage level rail. With reference to Figure 4, capacitor 26 is charged when X2 is high and IGBT transistor 12 is closed or activated. When X1 becomes high, the push-pull stage transistors 31, 32 can keep the gate G of MOSFET transistor 13 at a higher voltage than the HV300.

The modulation circuit part III modulates the rotational speed of the single-phase brushless DC fan motor M by activating or deactivating the first and third transistors 11, 13 of the H bridge IA using the PWM signal provided by the microcontroller (not shown). The PWM signal has a higher frequency than the signals X1, X2 provided by the commutation circuit part II.

The modulation circuit part III comprises an optical coupler 43, transistors 44, 45, and 46, diodes 47 and 48 and several resistors not individually provided with reference signs.

The transistor 44 is preferably provided as a npn transistor. Also the transistors 45 and 46 are both preferably provided as npn transistors. The basis of the transistor 44 is connected to a first terminal of the optical coupler 43 while the emitter of the transistors 44 is connected to a second terminal of the optical coupler 43, both of said terminals being connected to an internal transistor of the optical coupler 43. The collector of the transistor 44 is connected to the transistors 45 and 46 through the diodes 47 and 48, namely to the emitter and basis of the transistor 45 through diodes 48 and to the emitter and basis of the transistor 46 through diodes 47. The collector of transistors 45 is connected to the basis of transistor 31 while the collector of transistors 46 is connected to the basis of transistor 37. The cathodes of the diodes 47 and 48 are connected to collector of the transistor 44 while the anodes of the diodes 47 and 48 are connected to the basis of the respective one of the transistors 45 and 46.

The modulation of the rotational speed of the rotor of the motor M is achieved by activating and deactivating both MOSFET transistors 11 and 13 with the PWM signal. The output signal of the sensor H used as input signal of the commutation circuit part II and the PWM signal used as input signal of the modulation circuit part III both go through an optical coupler 15, 43 before reaching the microcontroller (not shown) to keep a galvanic isolation between the microcontroller and the voltage levels Ref, HV300 generated from the mains.

The fan control circuit 10 drive a single-phase BLDC motor M of a fan of a gas burner appliance. The fan control circuit 10 is embedded on the circuit board of the gas burner controller and not part of the fan as such.

The fan control circuit 10 uses four electrical switches 11, 12, 13, 14 connected in the H bridge structure IA. To guarantee the continuous rotation of the motor, the polarity of the voltage applied to the stator coil of the motor 10 is reversed, based on the position of the rotor of the motor M, detected through the sensor H.

A current limitation mechanism is also present which kicks in when the current in the coil of the motor increases above a level. The four electrical switches 11, 12, 13, 14 are kept closed until said current drops below the level.

For modulation of the fan speed the PWM signal is used which controls the MOSFET transistors 11, 13 and thus the average current in the stator coil of the motor M. The sensor output is a fed back signal so that the rotational speed of the motor M of the fan can be regulated in a closed loop. The PWM signal has a frequency to prevent the generation of acoustic noise.

### List of reference signs

- 10: fan control circuit
- I: power circuit part
- IA: H bridge
- IB: driver circuit part
- II: commutation circuit part
- III: modulation circuit part
- 11: electrical switch / MOSFET transistor
- 12: electrical switch /IGBT transistor
- 13: electrical switch / MOSFET transistor
- 14: electrical switch /IGBT transistor
- 15: optical coupler
- 16: comparator
- 17: comparator
- 18: comparator
- 19: comparator
- 20: transistor
- 21: transistor
- 22: diode
- 23: diode
- 24: diode
- 25: diode
- 26: capacitor
- 27: capacitor
- 28: capacitor
- 29: capacitors
- 30: resistor
- 31: transistor
- 32: transistor
- 33: diode
- 34: diode
- 35: capacitor
- 36: capacitor
- 37: transistor
- 38: transistor
- 39: diode
- 40: diode
- 41: capacitor
- 42: capacitor
- 43: optical coupler
- 44: transistor
- 45: transistor
- 46: transistor
- 47: diode
- 48: diode
- M: single-phase brushless DC fan motor
- H: sensor

## Claims

1. Fan control circuit (10) for controlling a single-phase brushless DC fan motor (M) of a fan of gas burner appliance, comprising:
a commutation circuit part (II) for providing signals (X1, X2) depending from the position of a rotor of the single-phase brushless DC fan motor (M), wherein said position of the rotor of the single-phase brushless DC motor (M) is detectable by a sensor (S) of the single-phase brushless DC motor (M) connectable to said commutation circuit part (II),
a power circuit part (I) to which a stator coil of the single-phase brushless DC fan motor (M) is connectable for proving electrical voltage to the stator coil of the single-phase brushless DC fan motor (M), said power circuit part (I) comprises:
a H-bridge (IA) with four electrical switches (11, 12, 13, 14) provided by transistors (11, 12, 13, 14), the stator coil of the single-phase brushless DC fan motor (M) being connectable to said H-bridge (IA) in such a way that polarity of the electrical voltage provided to the stator coil of single-phase brushless DC fan motor (M) is changeable by changing the state of operation of the four electrical switches (11, 12, 13, 14) of the H-bridge (IA),
a driver circuit part (IB) for changing the state of operation of the four electrical switches (11, 12, 13, 14) of the H-bridge (IA) on basis of the signals (X1, X2) provided by the commutation circuit part (II),
a modulation circuit part (III) for modulating the rotational speed of the rotor of the single-phase brushless DC fan motor (M),
**characterized in that**
the driver circuit part (IB) of power circuit part (I) changes the state of operation of the four transistors (11, 12, 13, 14) of the H-bridge (IA) on basis of the signals (X1, X2) provided by the commutation circuit part (II) in such a way that either a first transistor (11) and second transistor (12) of the H-bridge (IA) or a third transistor (13) and a fourth transistor (14) of the H-bridge (IA) are closed or activated while the other transistors of the H-bridge (IA) are opened or inactivated,
the first transistor (11) of the H-bridge (IA) of power circuit part (I) is a MOSFET transistor and the second transistor (12) of the H-bridge (IA) is a IGBT transistor, wherein the first output signal (X2) of the commutation circuit part (II) is provided to the first and second transistors (11, 12) of the H-bridge (IA) of power circuit part (I),
the third transistor (13) of the H-bridge (IA) of power circuit part (I) is a MOSFET transistor and the fourth transistor (14) of the H-bridge (IA) is a IGBT transistor, wherein the second output signal (X1) of the commutation circuit part (II) is provided to the third and fourth transistors (13, 14) of the H-bridge (IA) of power circuit part (I).

2. Fan control circuit as claimed in claim 1, **characterized in that** the sensor (S) of the single-phase brushless DC motor (M) is a sensor that provides as input signal for the commutation circuit part (II) a logic 0 or a logic 1 depending from the position of the magnetic poles of the rotor of the single-phase brushless DC motor (M).

3. Fan control circuit as claimed in claim 1 and 2, **characterized in that**
the commutation circuit part (II) provides a first output signal (X2) for closing or activating the first transistor (11) of the H-bridge (IA) of power circuit part (I) and the second transistor (12) of the H-bridge (IA) of power circuit part (I) when the input signal of the commutation circuit part (II) is a logic 1, and
the commutation circuit part (II) provides a second output signal (X1) for closing or activating the third transistor (13) of the H-bridge (IA) of power circuit part (I) and the fourth transistor (14) of the H-bridge (IA) of power circuit part (I) when the input signal of the commutation circuit part (II) is a logic 0.

4. Fan control circuit as claimed in of claims 1 to 3, **characterized in that**
the first output signal (X2) of the commutation circuit part (II) is provided directly to the gate (G) of the second transistor (12) and through a first bootstrap section of the driver circuit part (IB) to gate of the first transistor (11),
the second output signal (X1) of the commutation circuit part (II) is provided directly to the gate (G) of the fourth transistor (14) and through a second bootstrap section of the driver circuit part (IB) to gate of the third transistor (13).

5. Fan control circuit as claimed in 3 or 4, **characterized in that** if signal provided by the motor sensor (S) and thereby the input signal of the commutation circuit part (II) changes from a logic 1 to a logic 0, then a first capacitor (29) of the commutation circuit part (II) becomes discharged with a higher speed than a second capacitor (26) becomes charged.

6. Fan control circuit as claimed in one of claims 1 to 3, **characterized in that** after the first capacitor (29) is discharged all transistors (11, 12, 13, 14) of the H-bridge (IA) are opened or deactivate, and that after the second capacitor (26) is charged, the output signal (X2) for closing or activating the third and fourth transistors (13, 14) is provided by the commutation circuit part (II).

7. Fan control circuit as claimed in claim 5 or 6, **characterized in that** if signal provided by the motor sensor (S) and thereby the input signal of the commutation circuit part (II) changes from a logic 0 to a logic 1, then the second capacitor (26) of the commutation circuit part (II) becomes discharged with a higher speed than the first capacitor (29) becomes charged.

8. Fan control circuit as claimed in claim 7, **characterized in that** after the second capacitor (26) is discharged all transistors (11, 12, 13, 14) of the H-bridge (IA) are opened or deactivate, and that after the first capacitor (29) is charged, the output signal (X1) for closing or activating the first and second transistors (11, 12) is provided by the commutation circuit part (II).

9. Fan control circuit as claimed in one of claims 7 to 8, **characterized in that** the commutation circuit part (II) further comprises an electrical current limitation section having a resistor (30) for measuring the electrical current of the stator coil of the single-phase brushless DC fan motor (M) and a comparator (19), wherein the output of the comparator (19) discharges the first capacitor (29) and the second capacitor (26) when the electrical current is above a threshold.

10. Fan control circuit as claimed in one of claims 1 to 9, **characterized in that** modulation circuit part (III) modulates the rotational speed of the rotor of the single-phase brushless DC fan motor (M) by activating or deactivating the first and third transistors (11, 13) of the H bridge (IA) on basis of a PWM signal having a higher frequency than the signals (X1, X2) provided by the commutation circuit part (II).

11. Fan control circuit as claimed in one of claims 1 to 10, **characterized in that** the same is embedded in a gas burner controller circuit board.

## Patentansprüche

1. Gebläsesteuerungsschaltung (10) zum Steuern eines einphasigen bürstenlosen Gleichstromgebläsemotors (M) eines Gebläses eines Gasbrennergeräts, die Folgendes aufweist:
einen Kommutierungsschaltungsabschnitt (II) zum Bereitstellen von Signalen (X1, X2), die von der Position eines Rotors des einphasigen bürstenlosen Gleichstromgebläsemotors (M) abhängig sind, wobei die Position des Rotors des einphasigen bürstenlosen Gleichstromgebläsemotors (M) durch einen Sensor (S) des einphasigen bürstenlosen Gleichstromgebläsemotors (M) detektiert werden kann, der mit dem Kommutierungsschaltungsabschnitt (II) verbunden werden kann,
einen Leistungsschaltungsabschnitt (I), mit dem eine Statorspule des einphasigen bürstenlosen Gleichstromgebläsemotors (M) verbunden werden kann, um der Statorspule des einphasigen bürstenlosen Gleichstromgebläsemotors (M) elektrische Spannung zur Verfügung zu stellen, wobei der Leistungsschaltungsabschnitt (I) Folgendes aufweist:
eine H-Brücke (IA) mit vier elektrischen Schaltern (11, 12, 13, 14), die durch Transistoren (11, 12, 13, 14) vorgesehen sind, wobei die Statorspule des einphasigen bürstenlosen Gleichstromgebläsemotors (M) mit der H-Brücke (IA) derart verbunden werden kann, dass die Polarität der elektrischen Spannung, die der Statorspule des einphasigen bürstenlosen Gleichstromgebläsemotors (M) bereitgestellt wird, durch Ändern des Betriebszustands der vier elektrischen Schalter (11, 12, 13, 14) der H-Brücke (IA) geändert werden kann,
einen Treiberschaltungsabschnitt (IB) zum Ändern des Betriebszustands der vier elektrischen Schalter (11, 12, 13, 14) der H-Brücke (IA) auf der Grundlage des Signals (X1, X2), das von dem Kommutierungsschaltungsabschnitt (II) bereitgestellt wird,
einen Modulationsschaltungsabschnitt (III) zum Modulieren der Drehzahl des Rotors des einphasigen bürstenlosen Gleichstromgebläsemotors (M),
**dadurch gekennzeichnet, dass**
der Treiberschaltungsabschnitt (IB) des Leistungsschaltungsabschnitts (I) den Betriebszustand der vier Transistoren (11, 12, 13, 14) der H-Brücke (IA) auf der Grundlage des Signals (X1, X2), das von dem Kommutierungsschaltungsabschnitt (II) bereitgestellt wird, in der Weise ändert, dass entweder ein erster Transistor (11) und ein zweiter Transistor (12) der H-Brücke (IA) oder ein dritter Transistor (13) und ein vierter Transistor (14) der H-Brücke (IA) geschlossen oder aktiviert werden, während die anderen Transistoren der H-Brücke (IA) geöffnet oder deaktiviert werden,
der erste Transistor (11) der H-Brücke (IA) des Leistungsschaltungsabschnitts (I) ein MOSFET-Transistor ist und der zweite Transistor (12) der H-Brücke (IA) ein IGBT-Transistor ist, wobei das erste Ausgangssignal (X2) des Kommutierungsschaltungsabschnitts (II) für den ersten und zweiten Transistor (11, 12) der H-Brücke (IA) des Leistungsschaltungsabschnitts (I) bereitgestellt wird,
der dritte Transistor (13) der H-Brücke (IA) des Leistungsschaltungsabschnitts (I) ein MOSFET-Transistor ist und der vierte Transistor (14) der H-Brücke (IA) ein IGBT-Transistor ist, wobei das zweite Ausgangssignal (X1) des Kommutierungsschaltungsabschnitts (II) für den dritten und vierten Transistor (13, 14) der H-Brücke (IA) des Leistungsschaltungsabschnitts (I) bereitgestellt wird.

2. Gebläsesteuerungsschaltung nach Anspruch 1, **dadurch gekennzeichnet, dass** der Sensor (S) des einphasigen bürstenlosen Gleichstromgebläsemotors (M) ein Sensor ist, der für den Kommutierungsschaltungsabschnitt (II) in Abhängigkeit von der Position der magnetischen Pole des Rotors des einphasigen bürstenlosen Gleichstromgebläsemotors (M) eine logische 0 oder eine logische 1 als Eingangssignal bereitstellt.

3. Gebläsesteuerungsschaltung nach Anspruch 1 und 2, **dadurch gekennzeichnet, dass**
der Kommutierungsschaltungsabschnitt (II) ein erstes Ausgangssignal (X2) zum Schließen oder Aktivieren des ersten Transistors (11) der H-Brücke (IA) des Leistungsschaltungsabschnitts (I) und des zweiten Transistors (12) der H-Brücke (IA) des Leistungsschaltungsabschnitts (I) bereitstellt, wenn des Eingangssignal des Kommutierungsschaltungsabschnitts (II) eine logische 1 ist, und
der Kommutierungsschaltungsabschnitt (II) ein zweites Ausgangssignal (X1) zum Schließen oder Aktivieren des dritten Transistors (13) der H-Brücke (IA) des Leistungsschaltungsabschnitts (I) und des vierten Transistors (14) der H-Brücke (IA) des Leistungsschaltungsabschnitts (I) bereitstellt, wenn des Eingangssignal des Kommutierungsschaltungsabschnitts (II) eine logische 0 ist.

4. Gebläsesteuerungsschaltung nach einem der Ansprüche 1 bis 3, **dadurch gekennzeichnet, dass**
das erste Ausgangssignal (X2) des Kommutierungsschaltungsabschnitts (II) direkt für das Gate (G) des zweiten Transistors (12) und durch einen ersten Bootstrap-Abschnitt des Treiberschaltungsabschnitts (IB) für das Gate des ersten Transistors (11) bereitgestellt wird,
das zweite Ausgangssignal (X1) des Kommutierungsschaltungsabschnitts (II) direkt für den Steuereingang (G) des vierten Transistors (14) und durch einen zweiten Bootstrap-Abschnitt des Treiberschaltungsabschnitts (IB) für das Gate des dritten Transistors (13) bereitgestellt wird.

5. Gebläsesteuerungsschaltung nach Anspruch 3 oder 4, **dadurch gekennzeichnet, dass** dann, wenn das Signal von dem Motorsensor (S) bereitgestellt wird und sich dadurch das Eingangssignal des Kommutierungsschaltungsabschnitts (II) von einer logischen 1 zu einer logischen 0 ändert, ein erster Kondensator (29) des Kommutierungsschaltungsabschnitts (II) mit einer höheren Geschwindigkeit entladen wird als ein zweiter Kondensator (26) geladen wird.

6. Gebläsesteuerungsschaltung nach einem der Ansprüche 1 bis 3, **dadurch gekennzeichnet, dass,** nachdem der erste Kondensator (29) entladen worden ist, alle Transistoren (11, 12, 13, 14) der H-Brücke geöffnet oder deaktiviert werden, und dass, nachdem der zweite Kondensator (26) geladen worden ist, das Ausgangssignal (X2) zum Schließen oder Aktivieren des dritten und vierten Transistors (13, 14) durch den Kommutierungsschaltungsabschnitt (II) bereitgestellt wird.

7. Gebläsesteuerungsschaltung nach Anspruch 5 oder 6, **dadurch gekennzeichnet, dass** dann, wenn das Signal von dem Motorsensor (S) bereitgestellt wird und sich dadurch das Eingangssignal des Kommutierungsschaltungsabschnitts (II) von einer logischen 0 zu einer logischen 1 ändert, der zweite Kondensator (26) des Kommutierungsschaltungsabschnitts (II) mit einer höheren Geschwindigkeit entladen wird als der erste Kondensator (29) geladen wird.

8. Gebläsesteuerungsschaltung nach Anspruch 7, **dadurch gekennzeichnet, dass,** nachdem der zweite Kondensator (26) entladen worden ist, alle Transistoren (11, 12, 13, 14) der H-Brücke geöffnet oder deaktiviert werden und dass, nachdem der erste Kondensator (29) geladen worden ist, das Ausgangssignal (X1) zum Schließen oder Aktivieren des ersten und zweiten Transistors (11, 12) durch den Kommutierungsschaltungsabschnitt (II) bereitgestellt wird.

9. Gebläsesteuerungsschaltung nach einem der Ansprüche 7 bis 8, **dadurch gekennzeichnet, dass** der Kommutierungsschaltungsabschnitt (II) ferner einen Abschnitt zum Begrenzen des elektrischen Stroms, der einen Widerstand (30) zum Messen des elektrischen Stroms der Statorspule des einphasigen bürstenlosen Gleichstromgebläsemotors (M) aufweist, und einen Komparator (19) aufweist, wobei der Ausgang des Komparators (19) den ersten Kondensator (29) und den zweiten Kondensator (26) entlädt, wenn der elektrische Strom über einem Schwellenwert liegt.

10. Gebläsesteuerungsschaltung nach einem der Ansprüche 1 bis 9, **dadurch gekennzeichnet, dass** der Modulationsschaltungsabschnitt (III) die Drehzahl des Rotors des einphasigen bürstenlosen Gleichstromgebläsemotors (M) durch Aktivieren oder Deaktivieren des ersten und dritten Transistors (11, 13) der H-Brücke (IA) auf der Grundlage eines PWM-Signals, das eine höhere Frequenz als die Signale (X1, X2), die von dem Kommutierungsschaltungsabschnitt (II) bereitgestellt werden, aufweist, moduliert.

11. Gebläsesteuerungsschaltung nach einem der Ansprüche 1 bis 10, **dadurch gekennzeichnet, dass** diese in eine Leiterplatte einer Gasbrenner-Steuervorrichtung eingebettet ist.

## Revendications

1. Circuit de commande de ventilateur (10) pour commander un moteur de ventilateur à courant continu monophasé sans balais (M) d'un ventilateur d'un appareil à brûleur à gaz, le circuit comprenant :
une partie de circuit de commutation (II) pour fournir des signaux (X1, X2) dépendant de la position d'un rotor du moteur de ventilateur à courant continu monophasé sans balais (M), où ladite position du rotor du moteur à courant continu monophasé sans balais (M) peut être détectée par un capteur (S) du moteur à courant continu monophasé sans balais (M) pouvant être connecté à ladite partie de circuit de commutation (II),
une partie de circuit de puissance (I) à laquelle une bobine de stator du moteur de ventilateur à courant continu monophasé sans balais (M) peut être connectée pour fournir une tension électrique à la bobine de stator du moteur de ventilateur à courant continu monophasé sans balais (M), ladite partie de circuit de puissance (I) comprenant :
un pont en H (IA) avec quatre commutateurs électriques (11, 12, 13, 14) fournis par des transistors (11, 12, 13, 14), la bobine de stator du moteur de ventilateur à courant continu sans balais monophasé (M) pouvant être connectée audit pont en H (IA) de sorte que la polarité de la tension électrique fournie à la bobine de stator du moteur de ventilateur à courant continu sans balais monophasé (M) puisse être modifiée en changeant l'état de fonctionnement des quatre commutateurs électriques (11, 12, 13, 14) du pont en H (IA),
une partie de circuit d'attaque (IB) pour changer l'état de fonctionnement des quatre commutateurs électriques (11, 12, 13, 14) du pont en H (IA) sur la base des signaux (X1, X2) fournis par la partie de circuit de commutation (II),
une partie de circuit de modulation (III) pour moduler la vitesse de rotation du rotor du moteur de ventilateur à courant continu monophasé sans balais (M),
**caractérisé en ce que :**
la partie de circuit d'attaque (IB) de la partie de circuit de puissance (I) change l'état de fonctionnement des quatre transistors (11, 12, 13, 14) du pont en H (IA) sur la base des signaux (X1, X2) fournis par la partie de circuit de commutation (II) de sorte que soit un premier transistor (11) et un deuxième transistor (12) du pont en H (IA), soit un troisième transistor (13) et un quatrième transistor (14) du pont en H (IA) sont fermés ou activés tandis que les autres transistors du pont en H (IA) sont ouverts ou inactivés,
le premier transistor (11) du pont en H (IA) de la partie de circuit de puissance (I) est un transistor MOSFET et le deuxième transistor (12) du pont en H (IA) est un transistor IGBT, où le premier signal de sortie (X2) de la partie de circuit de commutation (II) est fourni aux premier et deuxième transistors (11, 12) du pont en H (IA) de la partie de circuit de puissance (I),
le troisième transistor (13) du pont en H (IA) de la partie de circuit de puissance (I) est un transistor MOSFET et le quatrième transistor (14) du pont en H (IA) est un transistor IGBT, où le deuxième signal de sortie (X1) de la partie de circuit de commutation (II) est fourni aux troisième et quatrième transistors (13, 14) du pont en H (IA) de la partie de circuit de puissance (I) .

2. Circuit de commande de ventilateur tel que revendiqué dans la revendication 1, **caractérisé en ce que** le capteur (S) du moteur à courant continu monophasé sans balais (M) est un capteur qui fournit comme signal d'entrée pour la partie de circuit de commutation (II) un 0 logique ou un 1 logique en fonction de la position des pôles magnétiques du rotor du moteur à courant continu monophasé sans balais (M).

3. Circuit de commande de ventilateur tel que revendiqué dans les revendications 1 et 2, **caractérisé en ce que :**
la partie de circuit de commutation (II) fournit un premier signal de sortie (X2) pour fermer ou activer le premier transistor (11) du pont en H (IA) de la partie de circuit de puissance (I) et le deuxième transistor (12) du pont en H (IA) de la partie de circuit de puissance (I) lorsque le signal d'entrée de la partie de circuit de commutation (II) est un 1 logique, et
la partie de circuit de commutation (II) fournit un deuxième signal de sortie (X1) pour fermer ou activer le troisième transistor (13) du pont en H (IA) de la partie de circuit de puissance (I) et le quatrième transistor (14) du pont en H (IA) de la partie de circuit de puissance (I) lorsque le signal d'entrée de la partie de circuit de commutation (II) est un 0 logique.

4. Circuit de commande de ventilateur tel que revendiqué dans l'une des revendications 1 à 3, **caractérisé en ce que :**
le premier signal de sortie (X2) de la partie de circuit de commutation (II) est fourni directement à la grille (G) du deuxième transistor (12) et, à travers une première section d'amorçage de la partie de circuit d'attaque (IB), à la grille du premier transistor (11),
le deuxième signal de sortie (X1) de la partie de circuit de commutation (II) est fourni directement à la grille (G) du quatrième transistor (14) et, à travers une deuxième section d'amorçage de la partie de circuit d'attaque (IB), à la grille du troisième transistor (13).

5. Circuit de commande de ventilateur tel que revendiqué dans la revendication 3 ou la revendication 4, **caractérisé en ce que,** si le signal fourni par le capteur de moteur (S) et donc le signal d'entrée de la partie de circuit de commutation (II) change d'un niveau logique 1 à un niveau logique 0, alors un premier condensateur (29) de la partie de circuit de commutation (II) se décharge à une vitesse plus élevée que celle à laquelle un deuxième condensateur (26) se charge.

6. Circuit de commande de ventilateur tel que revendiqué dans l'une des revendications 1 à 3, **caractérisé en ce qu**'après la décharge du premier condensateur (29), tous les transistors (11, 12, 13, 14) du pont en H (IA) sont ouverts ou désactivés, et en ce qu'après la charge du deuxième condensateur (26), le signal de sortie (X2) pour la fermeture ou l'activation des troisième et quatrième transistors (13, 14) est fourni par la partie de circuit de commutation (II).

7. Circuit de commande de ventilateur tel que revendiqué dans la revendication 5 ou la revendication 6, **caractérisé en ce que,** si le signal fourni par le capteur de moteur (S) et donc le signal d'entrée de la partie de circuit de commutation (II) passe d'un niveau logique 0 à un niveau logique 1, alors le deuxième condensateur (26) de la partie de circuit de commutation (II) se décharge à une vitesse plus élevée que celle à laquelle le premier condensateur (29) se charge.

8. Circuit de commande de ventilateur tel que revendiqué dans la revendication 7, **caractérisé en ce qu**'après la décharge du deuxième condensateur (26), tous les transistors (11, 12, 13, 14) du pont en H (IA) sont ouverts ou désactivés, et en ce qu'après que la charge du premier condensateur (29), le signal de sortie (X1) pour la fermeture ou l'activation des premier et deuxième transistors (11, 12) est fourni par la partie de circuit de commutation (II).

9. Circuit de commande de ventilateur tel que revendiqué dans l'une des revendications 7 à 8, **caractérisé en ce que** la partie de circuit de commutation (II) comprend en outre une section de limitation de courant électrique ayant une résistance (30) pour mesurer le courant électrique de la bobine de stator du moteur de ventilateur à courant continu sans balais monophasé (M) et un comparateur (19), où la sortie du comparateur (19) décharge le premier condensateur (29) et le deuxième condensateur (26) lorsque le courant électrique est supérieur à un seuil.

10. Circuit de commande de ventilateur tel que revendiqué dans l'une des revendications 1 à 9, **caractérisé en ce que** la partie de circuit de modulation (III) module la vitesse de rotation du rotor du moteur de ventilateur monophasé à courant continu sans balais (M) en activant ou en désactivant les premier et troisième transistors (11, 13) du pont en H (IA) sur la base d'un signal PWM ayant une fréquence plus élevée que les signaux (X1, X2) fournis par la partie de circuit de commutation (II).

11. Circuit de commande de ventilateur tel que revendiqué dans l'une des revendications 1 à 10, **caractérisé en ce qu**'il est intégré dans une carte de circuit de contrôleur de brûleur à gaz.
